# EUROPEAN PATENT APPLICATION

(11) **EP 4 429 010 A1**
(43) Date of publication of application: **11.09.2024**
(21) Application number: 23824156.6
(22) Date of filing: 08.06.2023
(51) Int. Cl.: H01M 50/35, H01M 50/308, H01M 50/30, H01M 50/249, H01M 50/204

(54) **BATTERY PACK AND DEVICE COMPRISING SAME**

(30) Priority: 13.06.2022 KR 20220071456
(71) Applicant: LG Energy Solution, Ltd., Seoul 07335 (KR)
(72) Inventor: KIM, Kyungwoo, Daejeon 34122 (KR); CHI, Ho June, Daejeon 34122 (KR); KIM, Seung Joon, Daejeon 34122 (KR); HWANG, Ji Soo, Daejeon 34122 (KR); KANG, Jongmo, Daejeon 34122 (KR)
(74) Representative: Plasseraud IP
(86) International application number: PCT/KR2023/007894
(87) International publication number: WO 2023/243939

(57) **Abstract**

A battery pack according to an embodiment of the present invention includes: at least one battery module; a pack frame accommodating the battery module; a venting hole formed in the pack frame; and a mesh structure covering the venting hole, wherein a duct member is formed between the mesh structure and the pack frame, and an adsorption member is formed on the duct member.

## Description

### [Technical Field]

### CROSS-REFERENCE TO RELATED APPLICATION

This application claims priority to and the benefit of Korean Patent Application No. 10-2022-0071456 filed in the Korean Intellectual Property Office on June 13, 2022, the entire contents of which are incorporated herein by reference.

The present invention relates to a battery pack and a device including the same, and more particularly, to a battery pack having improved safety and a device including the same.

### [Background Art]

There has been increasing technology development and demand for a mobile device, and demand for a secondary battery as an energy source is thus rapidly increasing. In particular, the secondary battery is spotlighted as the energy source for a power device such as an electric bicycle, an electric vehicle or a hybrid electric vehicle, as well as a mobile device such as a mobile phone, a digital camera, a laptop computer or a wearable device.

Meanwhile, in recent years, as a need for a large-capacity structure including usage as an energy storage source has been increasing, there is an increasing demand for a plurality of battery modules in which a plurality of secondary batteries are connected in series and/or parallel with each other and a battery pack having a multi-module structure in which the battery modules are assembled with each other.

In addition, when configuring a battery pack by connecting a plurality of battery cells in series/parallel with each other, a method is generally used in which the battery module including at least one battery cell is first configured, and the battery pack is then configured by adding other components by using the at least one battery module.

In general, the secondary battery may have lower performance when having a temperature higher than an appropriate temperature, and may explode or ignite in a severe case. In particular, the plurality of secondary batteries, that is, the battery module or battery pack having the battery cells may have a temperature more quickly and severely increased due to a sum of heat emitted from the plurality of battery cells in a small space. In other words, heat occurring in the battery cells during charging and discharging of the battery pack may not be easily dissipated although high output may be acquired from the battery module in which the plurality of battery cells are stacked on each other and the battery pack equipped with the battery module. When heat occurring in the battery cell is not properly dissipated, the battery cell may have a rapidly lower performance, which may lead to its shorter lifespan and an increased possibility of its explosion or ignition.

Here, a flame may occur when the battery cell, the battery module, and the battery back ignite, and there is a high possibility of fire due to a venting gas and the flame occurring in the battery cell. In particular, when the flame occurs in the battery pack, the venting gas may be discharged from a venting hole formed in the battery pack. In a process of preventing the flame from being exposed outside the battery pack, the venting hole may be blocked by internal dust and an ignition source, and sealing of the battery back may thus be destroyed by a venting pressure, which may cause the flame to be exposed outside the battery pack.

Therefore, there is a need for a battery pack securing its safety by having a structure of discharging the venting gas when the flame occurs therein and preventing the flame from being exposed to the outside, in particular, a structure of preventing a venting path formed by the venting hole from being blocked due to the internal dust and the ignition source.

### [Disclosure]

### [Technical Problem]

The present invention attempts to provide a battery pack having improved safety and a device including the same.

Objects that are to be solved by the present invention are not limited to the above-mentioned objects, and objects that are not mentioned will be clearly understood by those skilled in the art to which the present invention pertains from the specification and the accompanying drawings.

### [Technical Solution]

According to an embodiment, a battery pack includes: at least one battery module; a pack frame accommodating the battery module; a venting hole formed in the pack frame; and a mesh structure covering the venting hole, wherein a duct member is formed between the mesh structure and the pack frame, and an adsorption member is formed on the duct member.

The duct member may include a body part; a hole part formed in the body part; and an extension part extending from a lower end of the body part to protrude in a direction perpendicular to the body part.

The adsorption member may be formed on the extension part.

The extension part may include a bottom part formed by extending from the body part, a front part and a side part each extending from the bottom part.

The adsorption member may be formed on an outer surface of the bottom part.

The adsorption member may be formed on an outer surface of the front part.

The adsorption member may be formed on an outer surface of the side part.

The body part may be fixed to an outside of the pack frame, and the extension part may be disposed in the pack frame.

The pack frame may include an upper pack housing and a lower pack housing, and the venting hole and the mesh structure may be formed in the lower pack housing.

The duct member may be formed to be disposed in the lower pack housing.

The adsorption member may be disposed in the lower pack housing.

The battery pack may further include a fixing member, wherein the fixing member may couple the mesh structure, the duct member and the pack frame to one another.

A device according to another embodiment of the present invention includes the battery pack described above.

### [Advantageous Effects]

The battery pack according to an embodiment of the present invention may include the duct member, and the duct member may include the adsorption member to collect the ignition source and the particle in the battery pack, thereby preventing the lower performance of the mesh structure.

In addition, in the battery pack according to this embodiment, the venting path may be formed by the venting hole and the mesh structure, and the venting gas may be discharged by the venting path to suppress the flame, thereby preventing the flame from being exposed to the outside.

In addition, the battery pack of the present invention may have the improved safety and protect the user by the above configuration.

Objects that are to be solved by the present invention are not limited to the above-mentioned objects, and objects that are not mentioned will be clearly understood by those skilled in the art to which the present invention pertains from the specification and the accompanying drawings.

### [Description of the Drawings]

FIG. 1 is a perspective view showing a battery pack according to an embodiment of the present invention.
FIG. 2 is a perspective view showing the battery pack of FIG. 1 and a battery module accommodated in the battery pack.
FIG. 3 is a perspective view of the battery module included in the battery pack of FIG. 1.
FIG. 4 is an enlarged view of a part A of FIG. 1.
FIG. 5 is a view showing a cross section cut along a cut line B-B' of FIG. 4.
FIG. 6 is a perspective view showing a duct member included in the battery pack of FIG. 1.
FIG. 7 is another perspective view showing the duct member included in the battery pack of FIG. 1.
FIG. 8 is a view showing a battery pack of a comparative example.
FIG. 9 is a view showing a cross section cut along a cut line C-C' of FIG. 8.

### [Mode for Invention]

Hereinafter, embodiments of the present invention are described in detail to be easily practiced by those skilled in the art to which the present invention pertains. However, the present invention may be modified in various different forms, and is not limited to the embodiments provided herein.

A portion unrelated to the description is omitted in order to obviously describe the present invention, and the same or similar components are denoted by the same reference numeral throughout the specification.

In addition, the size and thickness of each component shown in the drawings are arbitrarily shown for convenience of explanation, and therefore, the present invention is not necessarily limited to contents shown in the drawings. The thicknesses are exaggerated in the drawings in order to clearly represent several layers and regions. In addition, the thicknesses of some layers and regions are exaggerated in the drawings for convenience of explanation.

In addition, when an element such as a layer, a film, a region or a substrate is referred to as being "on" or "above" another element, the element may be "directly on" another element or may have a third element interposed therebetween. On the contrary, when an element is referred to as being "directly on" another element, there is no third element interposed therebetween. In addition, when an element is referred to as being "on" or "above" a reference element, the element may be disposed on or below the reference element, and may not necessarily be "on" or "above" the reference element in an opposite direction of gravity.

In addition, throughout the specification, unless described to the contrary, "including" any component will be understood to imply the inclusion of other elements rather than the exclusion of other elements.

In addition, throughout the specification, an expression "on the plane" may indicate a case where a target is viewed from the top, and an expression "on the cross section" may indicate a case where a cross section of the target taken in a vertical direction is viewed from its side.

Terms 'first', 'second', and the like, may be used to describe various components. However, the components are not to be construed as being limited by these terms. The terms are used only to distinguish one component from another component.

Hereinafter, the description describes a battery pack according to an embodiment of the present invention.

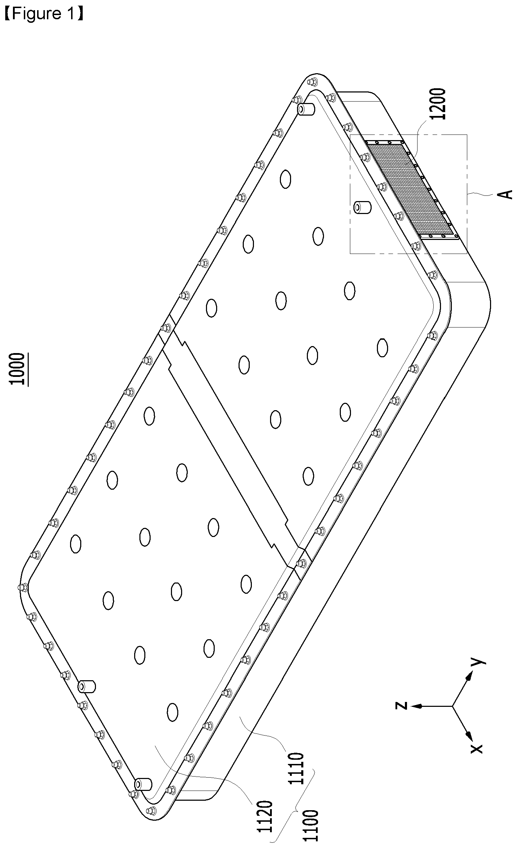

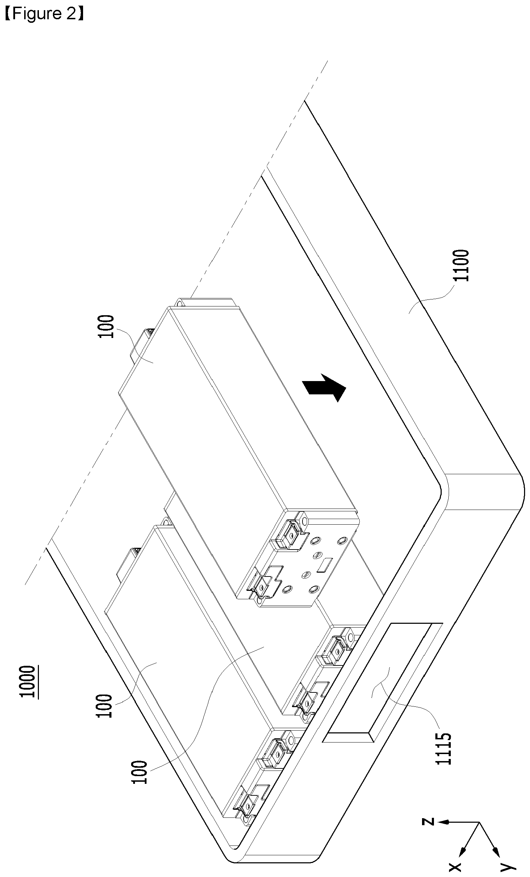

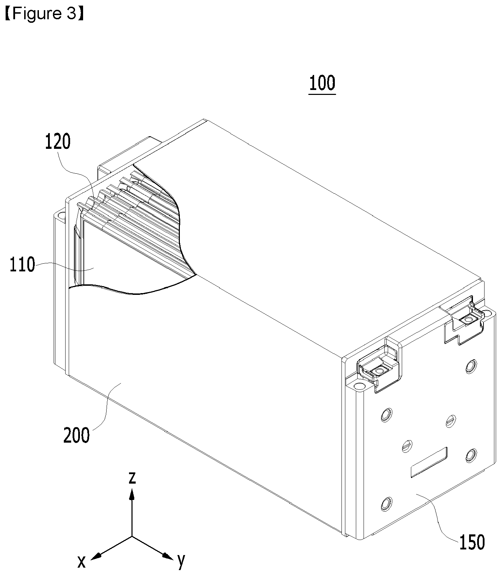

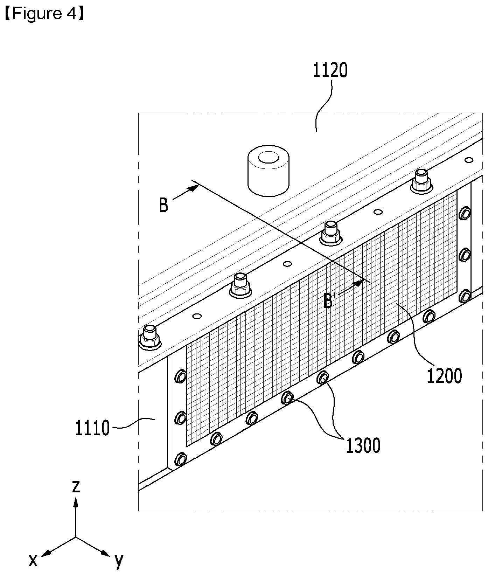

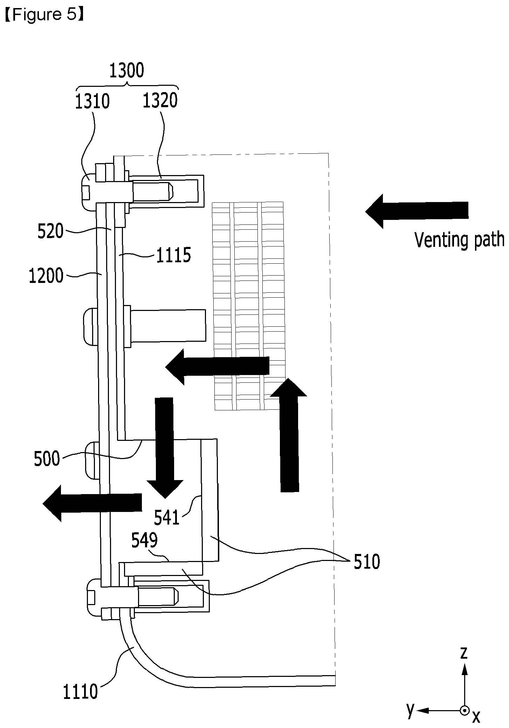

FIG. 1 is a perspective view showing a battery pack according to an embodiment of the present invention. FIG. 2 is a perspective view showing the battery pack of FIG. 1 and a battery module accommodated in the battery pack. FIG. 3 is a perspective view of the battery module included in the battery pack of FIG. 1. FIG. 4 is an enlarged view of a part A of FIG. 1. FIG. 5 is a view showing a cross section cut along a cut line B-B' of FIG. 4.

Referring to FIGS. 1 to 3, a battery pack 1000 according to an embodiment of the present invention may include at least one battery module 100 and a pack frame 1100 accommodating the battery module 100.

Referring to FIG. 3, the battery module 100 may include a battery cell stack 120 formed by stacking a plurality of battery cells 110 on each other in a predetermined direction, and a module frame 200 accommodating the battery cell stack 120. In addition, the module frame 200 may have a structure for covering its four surfaces corresponding to the upper part, lower part, left surface and right surface of the battery cell stack 120, and the front and rear surfaces of the battery cell stack may have an open structure. The front and rear surfaces of the battery cell stack 120 open by the module frame 200 may be covered by an end plate 150. Here, the plurality of battery cells 110 may not be limited to a particular type, and may thus be a pouch-type secondary battery or a prismatic secondary battery.

Here, referring to FIGS. 1 and 2, the pack frame 1100 may include a lower pack housing 1110 and an upper pack housing 1120 covering the lower pack housing 1110, and the plurality of battery modules 100 may be disposed at the bottom of the lower pack housing 1110. That is, the plurality of battery modules 100 may be disposed on the lower pack housing 1110, and the lower pack housing 1110 and the plurality of battery modules 100 may be covered by the upper pack housing 1120.

Meanwhile, the battery pack 1000 according to this embodiment may further include a venting hole 1115 formed in the pack frame 1100. In detail, the venting hole 1115 may be formed in any of the lower pack housing 1110 and upper pack housing 1120 of the pack frame 1100, and for example, the venting hole 1115 may be formed in the lower pack housing 1110. As the venting hole 1115 is formed in the lower pack housing 1110, venting gas occurring in the battery pack 1000 may be effectively discharged to the outside of the battery pack 1000.

Here, the battery pack 1000 according to this embodiment may further include a mesh structure 1200 covering the venting hole 1115. Not only the venting gas but also an ignition source and a particle, generated when internal components of the battery pack are partially destroyed, may occur when a flame occurs in the battery pack 1000. Here, the ignition source and particle, discharged to a venting path along with the venting gas may act as a cause of the flame occurring outside. Accordingly, the ignition source and particle may be filtered by the mesh structure 1200 to prevent the flame from leaking to the outside.

In addition, the mesh structure 1200 may cover the venting hole 1115, and thus be formed in any of the lower pack housing 1110 and upper pack housing 1120 of the pack frame 1100, and for example, may be formed to cover the venting hole 1115 in the lower pack housing 1110.

Here, referring to FIG. 4, the mesh structure 1200 may be formed on the pack frame 1100 to cover the venting hole 1115 and fixed by a fixing member 1300. Accordingly, the mesh structure 1200 may include a hole to which the fixing member 1300 is coupled, and components of the fixing member 1300 may be coupled to each other through the hole to allow the mesh structure 1200 and the pack frame 1100 to be coupled to each other.

Referring to FIG. 5, the fixing member 1300 may include a bolt member 1310 and a nut member 1320, and the bolt member 1310 and the nut member 1320 may be coupled to each other while having the mesh structure 1200 and the pack frame 1100 interposed therebetween. In addition, as described below, the battery pack 1000 according to this embodiment may further include a duct member 500, and the bolt member 1310 and the nut member 1320 may thus be coupled to each other while having the mesh structure 1200, the duct member 500, and the pack frame 1100 sequentially interposed therebetween. Accordingly, the battery pack may have a stable venting structure by not only forming the mesh structure 1200 on the pack frame 1100 while covering the venting hole 1115, but also fixing the duct member 500 between the mesh structure 1200 and the pack frame 1100.

However, the mesh structure covering the venting hole may be blocked by the ignition source and the particle. That is, when the flame occurs in the battery pack, the ignition source and the particle may be moved along the flame and the venting gas, and the ignition source and the particle may be filtered by the mesh structure. Here, the accumulated ignition sources and particles may block a plurality of pores of the mesh structure, thus also blocking the venting hole. Here, a pressure in the battery pack may be increased as the venting hole and the mesh structure are blocked, and in this case, the sealing of the battery pack may be damaged, and the flame occurring in the battery pack may be exposed to the outside, which may cause an increased risk.

Accordingly, the battery pack 1000 according to this embodiment may include the duct member 500 formed between the mesh structure 1200 and the pack frame 1100. Hereinafter, the description describes the duct member 500 included in the battery pack 1000 according to this embodiment in more detail.

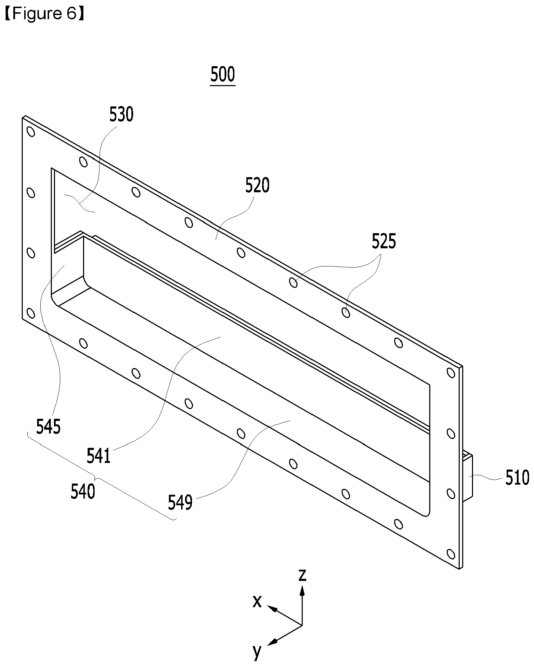

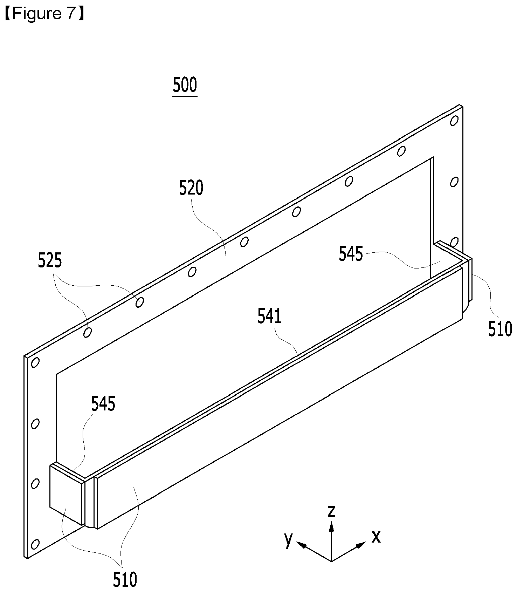

FIGS. 6 and 7 are perspective views showing the duct member included in the battery pack of FIG. 1.

Referring to FIGS. 6 and 7, the duct member 500 according to this embodiment may include a body part 520, a hole part 530 formed in the body part 520, and an extension part 540 extending from a lower end of the body part 520 to protrude in a direction perpendicular to the body part 520.

In addition, an adsorption member 510 may be formed on the duct member 500. In more detail, the adsorption member 510 may be formed on the extension part 540 of the duct member 500.

First, the duct member 500 according to this embodiment may include the body part 520. Here, the body part 520 may be a part coupled to the pack frame 1100, and formed between the mesh structure 1200 and the pack frame 1100 to fix the duct member 500 to the battery pack 1000.

In particular, a coupling hole 525 may be formed in the body part 520. Here, the plurality of coupling holes 525 may be formed in the body part 520, and the components of the fixing member 1300 may be coupled to each other through the coupling hole 525 to fix the body part 520 to the pack frame 1100.

The hole part 530 may be further formed in the body part 520 of the duct member 500 according to this embodiment. In detail, the hole part 530 may be formed at the center of the body part 520, and in more detail, the hole part 530 may be formed to correspond to the venting hole 1115 and the mesh structure 1200. Therefore, the hole part 530 may also be formed to have a shape corresponding to a shape of the venting hole 1115, and is not limited thereto.

The duct member 500 may be formed to include the hole part 530 to prevent the mesh structure 1200 from being blocked by the ignition source and the particle and not to obstruct the venting path leading to the venting hole 1115 and the mesh structure 1200, thereby allowing the venting gas occurring in the battery pack 1000 to be smoothly discharged to the outside of the battery pack 1000.

Meanwhile, the duct member 500 of the battery pack 1000 according to this embodiment may further include the extension part 540 extending from the lower end of the body part 520 to protrude in the direction (-y direction) perpendicular to the body part.

Here, the extension part 540 may include a bottom part 549 formed by extending from the body part 520, a front part 541 and a side part 545 each extending from the bottom part 549 in a vertical direction (z direction).

In addition, as described above, the adsorption member 510 may be formed on the duct member 500, and for example, the adsorption member 510 may be formed on the extension part 540.

Here, the duct member 500 according to this embodiment may be formed to prevent part or all of the mesh structure 1200 from being blocked, in particular, to prevent a lower end of the mesh structure 1200 from being blocked by the ignition source and the particles of the internal components of the battery pack that are included in the venting gas. That is, an additional component to minimize the ignition source and the particle, directed to the lower end of the mesh structure 1200, may be formed in the duct member 500, and an effect of minimizing the ignition source and the particle may be achieved by the adsorption member 510.

Therefore, the adsorption member 510 may be formed on the bottom part 549, front part 541, and side part 545 of the extension part 540. For example, the adsorption member 510 may be formed on an outer surface of the bottom part 549. The adsorption member 510 may be formed on an outer surface of the front part 541. The adsorption member 510 may be formed on an outer surface of the side part 545. This configuration may consider the venting path (y direction) from the inside of the pack frame 1100 toward the mesh structure 1200 when considering the venting path toward the lower end of the mesh structure 1200. That is, the adsorption member 510 may be formed on the outer surfaces of the front part 541 and the side part 545 to collect the ignition source and the particle, included in the venting gas. However, the adsorption member 510 according to this embodiment is not limited to the above-described disposition, and as shown in FIG. 5, the adsorption member 510 may be formed on an inner surface of the front part 541, an inner surface of the side part 545, and an inner surface of the bottom 549, disposed on the venting path.

In addition, the adsorption member 510 may be formed to cover part or all of the bottom part 549, the front part 541, and the side part 545. For example, the adsorption member 510 may be formed to cover part or all of the outer surface of the bottom part 549. The adsorption member 510 may be formed to cover part or all of the outer surface of the front part 541. The adsorption member 510 may be formed to cover part or all of the outer surface of the side part 545.

Here, the adsorption member 510 may not be limited to a particular shape, and may be formed to have a sheet shape, for example. However, the adsorption member 510 may have any shape as long as the adsorption member is formed on the extension part 540 to collect the ignition source and the particle.

Meanwhile, referring to FIGS. 4 and 5, the duct member 500 of the battery pack 1000 according to this embodiment may be fixed to an outside of the pack frame 1100, and the extension part 540 may be disposed in the pack frame 1100. That is, the body part 520 of the duct member 500 may be fixed to the outside of the pack frame 1100, and the extension part 540 may be disposed in the pack frame 1100. In addition, the body part 520 of the duct member 500 may be fixed to the outside of the pack frame 1100, and disposed between the mesh structure 1200 and the pack frame 1100.

In addition, the duct member 500 may be fixed to the outside of the pack frame 1100 by using the fixing member 1300, and for example, the fixing member 1300 may include the bolt member 1310 and the nut member 1320 to be fixed to the outside of the pack frame 1100 as the bolt member 1310 and the nut member 1320 are fastened to each other. Therefore, the fixing member 1300 may couple the mesh structure 1200, the duct member 500, and the pack frame 1100 to one another.

The duct member 500 may be formed to be disposed in the lower pack housing 1110 of the pack frame 1100. As described above, the venting hole 1115 and the mesh structure 1200 may be formed at the lower pack housing 1110, and the body part 520 of the duct member 500 may be disposed between the mesh structure 1200 and the lower pack housing 1110 and fixed thereto.

In addition, the extension part 540 of the duct member 500 may be disposed in the pack frame 1100, and the adsorption member 510 formed on the extension part 540 may thus be disposed in the pack frame 1100. For example, the adsorption member 510 may be disposed in the lower pack housing 1110.

Here, the adsorption member 510 may be disposed in the lower pack housing 1110 and formed below the venting hole 1115 to be disposed in a path of the venting gas.

Therefore, as described above, the battery pack 1000 according to this embodiment may form the venting path through the venting hole 1115 and the mesh structure 1200, and may include the duct member 500 formed in the corresponding path. Here, the mesh structure 1200 may have a possibility of being blocked or covered by the plurality of ignition sources and gases as the mesh structure filters the ignition sources and gases, and in this case, the venting gas may be unable to be discharged and the pressure in the battery pack may be increased, thus increasing the possibility in which the internal flame is exposed to the outside. Therefore, the ignition source and the particle may be primarily adsorbed and collected by the duct member 500 and the adsorption member 510 formed on the duct member 500, thereby preventing lower performance of the mesh structure 1200 and improving safety of the battery pack 1000 to protect a user.

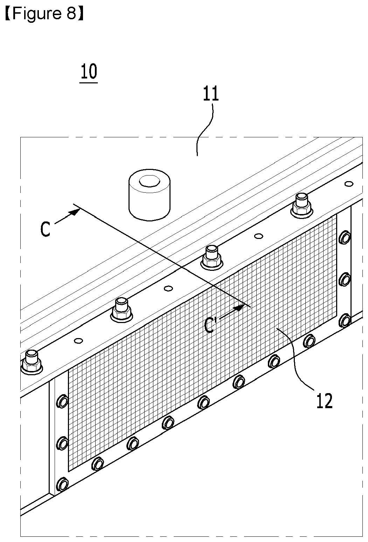

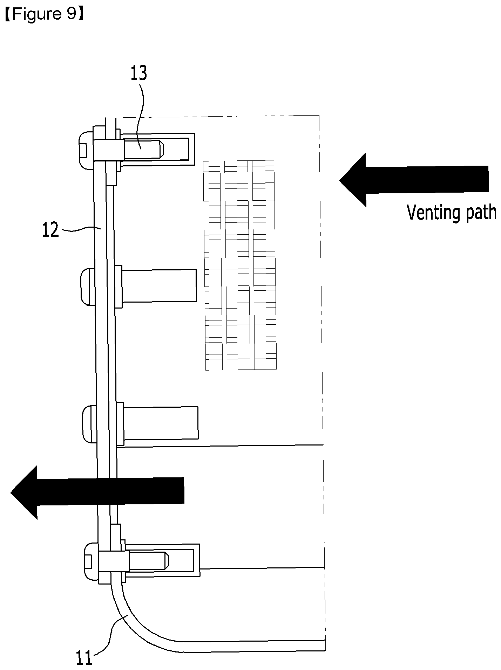

FIG. 8 is a view showing a battery pack of a comparative example. FIG. 9 is a view showing a cross section cut along a cut line C-C' of FIG. 8.

Referring to FIGS. 8 and 9, a battery pack 10 according to the comparative example may include a venting hole and a mesh structure 12, and venting gas may be directly delivered to the mesh structure 12 along a venting path. Therefore, the ignition sources or the particles may be filtered by the mesh structure 12 and may be deposited on an inner surface of the mesh structure 12.

In particular, the filtered ignition sources and particles may start to be deposited from the lowermost end of the mesh structure 12 to block a lower end of the mesh structure 12, thereby lowering filtering performance of the mesh structure 12. In addition, as the mesh structure 12 is blocked and a venting pressure in the battery pack 10 is increased, sealing parts of the battery pack 10 may be damaged to increase a risk in which a flame is exposed to the outside, thus lowering safety of the battery pack 10.

On the other hand, referring to FIGS. 1 to 7, the battery pack 1000 according to this embodiment may include the duct member 500 formed between the mesh structure 1200 and the pack frame 1100, and the adsorption member 510 may be formed in the duct member 500 to primarily collect the ignition source and the particle, thereby preventing the lower performance of the mesh structure 1200 and preventing the flame occurring in the battery pack 1000 from being exposed to the outside to thus improve the safety of the battery pack 1000. In addition, the user may be protected through the battery pack 1000 having the improved safety.

In addition, together with a configuration described above, the battery pack 1000 of the present invention may have a structure in which one or more battery modules are gathered and a battery management system (BMS) managing the temperature, voltage, or the like of the battery, a cooling device, or the like are added thereto and packed together.

In addition, the battery pack 1000 of the present invention may be applied to various devices. Such a device may be applied to transportation means such as an electric bicycle, an electric vehicle, and a hybrid vehicle. However, the present invention is not limited thereto, and may be applied to the various devices which may use the battery module and belongs to the scope of the present invention.

Although the embodiments of the present invention have been shown and described hereinabove, the present invention is not limited to the above-mentioned specific embodiments, and may be variously modified by those skilled in the art to which the present invention pertains without departing from the scope and spirit of the present invention as disclosed in the accompanying claims. These modifications should also be understood to fall within the scope of the present invention.

### <Description of symbols>

100: battery module
110: battery cell
120: battery cell stack
150: end plate
200: module frame
500: duct member
510: adsorption member
520: body part
525: coupling hole
530: hole part
540: extension part
1000: battery pack
1100: pack frame
1110: lower pack housing
1115: venting hole
1120: upper pack housing
1200: mesh structure
1300: fixing member

## Claims

1. A battery pack comprising:
at least one battery module;
a pack frame accommodating the battery module;
a venting hole formed in the pack frame; and
a mesh structure covering the venting hole,
wherein a duct member is formed between the mesh structure and the pack frame, and
an adsorption member is formed on the duct member.

2. The battery pack of claim 1, wherein the duct member includes
a body part;
a hole part formed in the body part; and
an extension part extending from a lower end of the body part to protrude in a direction perpendicular to the body part.

3. The battery pack of claim 2, wherein
the adsorption member is formed on the extension part.

4. The battery pack of claim 2, wherein
the extension part includes
a bottom part formed by extending from the body part,
a front part and a side part each extending from the bottom part.

5. The battery pack of claim 4, wherein
the adsorption member is formed on an outer surface of the bottom part.

6. The battery pack of claim 4, wherein
the adsorption member is formed on an outer surface of the front part.

7. The battery pack of claim 4, wherein
the adsorption member is formed on an outer surface of the side part.

8. The battery pack of claim 2, wherein
the body part is fixed to an outside of the pack frame, and
the extension part is disposed in the pack frame.

9. The battery pack of claim 1, wherein
the pack frame includes an upper pack housing and a lower pack housing, and
the venting hole and the mesh structure are formed in the lower pack housing.

10. The battery pack of claim 9, wherein
the duct member is formed to be disposed in the lower pack housing.

11. The battery pack of claim 9, wherein
the adsorption member is disposed in the lower pack housing.

12. The battery pack of claim 1, further comprising
a fixing member,
wherein the fixing member couples the mesh structure, the duct member and the pack frame to one another.

13. A device comprising the battery pack of claim 1.
